Europäisches Patentamt

**European Patent Office**

**Office européen des brevets**

(19)

(11) Publication number: **0 168 939**
A2

# EUROPEAN PATENT APPLICATION

(12)

(21) Application number: **85303997.2**

(22) Date of filing: **05.06.85**

(51) Int. Cl.⁴: **G 01 N 30/74**, G 01 N 21/05

(30) Priority: **13.06.84 US 620206**

(43) Date of publication of application: **22.01.86**
**Bulletin 86/4**

(84) Designated Contracting States: **DE FR GB SE**

(71) Applicant: **VARIAN ASSOCIATES, INC., 611 Hansen Way, Palo Alto, CA 94303 (US)**

(72) Inventor: **Kelderman, Herman F., 2728 Benvenue, Berkeley California (US)**
Inventor: **Achener, Pierre Y., 101 Twin Peaks Drive, Walnut Creek California (US)**
Inventor: **Abbott, Seth R., 4485 Camstock Court, Concord California (US)**

(74) Representative: **Cline, Roger Ledlie et al, STANLEY, POPPLEWELL, POOLE 57 Lincoln's Inn Fields, London WC2A 3LS (GB)**

(54) **Liquid chromatographic eluent absorbance detector.**

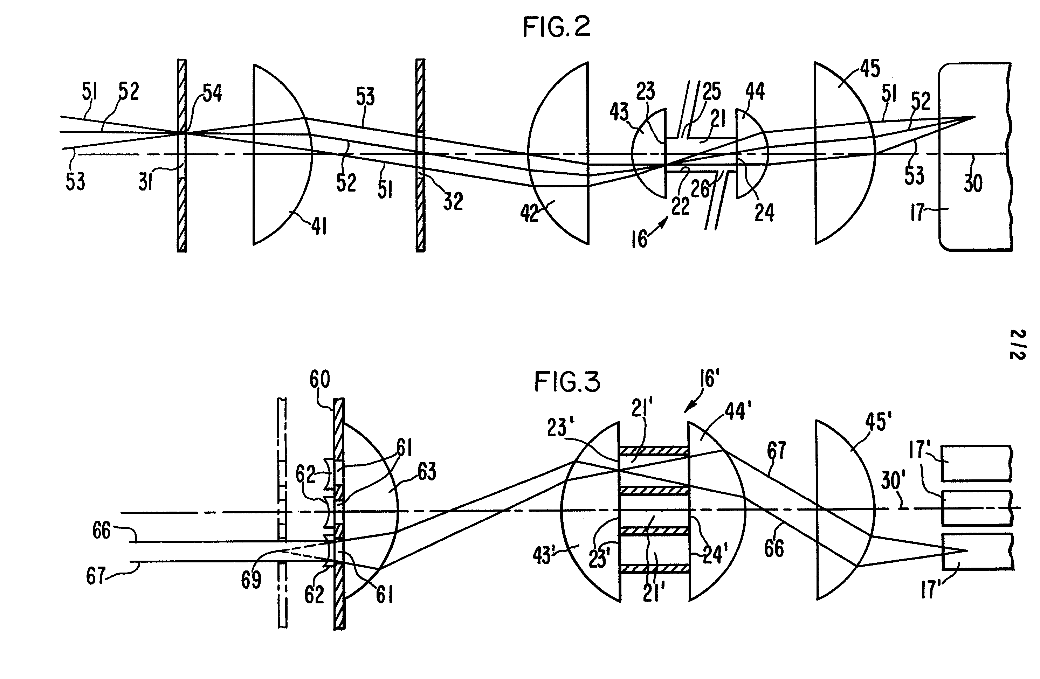

(57) A liquid chromatography eluent absorbance detector has a tubular flow cell or a set of such cells (16) defining therein a column or columns of flowing liquid. A beam from a multi-wavelenght light source (11) is split into two parts by a beamsplitter (13), one becoming analyzed by a reference detector (14) and the other through a monochromator (15). An optical system (Fig. 2) causes the monochromatic light flux or fluxes to pass through the cell or cells (16) by substantially entirely sweeping the column or columns of the liquid without any internal reflection.

## Liquid Chromatographic Eluent Absorbance Detector

### Background of the Invention

The present invention relates to an absorbance detector with reduced noise for liquid chromatographic eluent and more particularly to an apparatus for measuring the photo-absorbance of a liquid eluent separated on a chromatographic column and flowing continuously through a sample cell during an on-stream measurement.

In the field of optical absorbance measurement in liquid chromatography, it is generally desirable on the one hand to minimize the smallest detectable quantities, for example, by passing a maximum light flux through a minimum volume of liquid resident in a flow cell and, on the other hand, to minimize the aberrations in absorbance dependent on the flow rate by substantially eliminating the interaction of light with the flow cell wall as well as with any adjacent layer subject to inconsistent optical inhomogeneities such as thermal refractive index gradients. In the past, however, these two objectives were often considered incompatible with each other and have been pursued in separate approaches. For example, the so-called light-piping method has been widely adopted to maximize the light flux through the flow cell. This method basically relies on multiple reflections off the cell wall which is typically a polished metal and a considerable fraction of the light flux from the entrance window can be thereby made to pass through the exit window. The physical throughput with such multiple reflections, however, falls far short of what can be geometrically conserved in light-piping. Whenever liquid corrosion changes the physics of the metal wall, furthermore, the reduction in throughput is by a factor that can be expected to change in magnitude and spectral distribution. Moreover, any optically inhomogeneous liquid layer adjacent to the wall unavoidably distorts the light-piping process due to the gradient in index and thus causes major flow rate effects. These can only be suppressed at the expense of chromatographic peak-broadening in heat exchangers.

One of the attempts in the past to reduce such undesirable effects resulted in the so-called "flaring" method whereby a physical beam stop is placed at the cell entrance and the cell bore is widened towards the exit in order to clear the truncated cone of illuminated liquid. See, for example, U.S. Pat. No. 4,011,451, issued March 8, 1977 to K. E. Nelson, which shows a photometric apparatus characterized by a conically-shaped flow cell. Another method of the same type was by "focusing", or putting an optical stop image anywhere along the light path through the liquid and widening the cell bore to clear the twin truncated cones of illuminated liquid. By either method, however, the cell volume actually becomes larger, not by a marginal, but a quite significant amount over the fundamental minimum volume of liquid required by the etendue, or geometrical acceptance of the optical system.

The optical system disclosed in U.S. Pat. No. 4,053,236, issued October 11, 1977, to J. G. Atwood, et al may be utilized to keep the light path away from the side walls of the flow cell. The apparatus disclosed in this patent, however, is designed for measuring the absorbance of a reaction mixture which is held stationary in a sample cell for the duration of measurement. Sample volumes of about 100 microliters were considered, but much smaller flow cells are mandatory in analytical scale liquid chromatography now.  This necessitates the introduction of new considerations in designing a sufficiently sensitive detector.

In U.S. Patent Application Serial No. 353,539 filed March 1, 1982 by one of the present inventors, an optical system was disclosed for directing an available light flux through the exact fundamental minimum illumination volume over a given absorbance path.  A flow cell with such an optical system would be suited for liquid chromatography, but it would not be able to function serviceably if incorporated in the aforementioned apparatus by Atwood because the reference beam from its 10%-reflecting splitter would be too weak.  Use of a more strongly reflective beamsplitter, on the other hand, would adversely affect the system's signal-to-noise ratio.

It is therefore an object of the present invention to provide a highly sensitive apparatus for measuring absorbance of a liquid chromatographic eluent.

It is another object of the present invention to provide an optical system for a liquid chromatographic eluent absorbance detector which will send a beam of light through a cylindrical column so that the illuminated volume of liquid substantially equals the fundamental minimum volume required to transmit the available light flux over a given absorbance path.

It is still another object of the present invention to provide such an optical system as described above that will keep reliably in the dark not only the flow cell walls but also any optically disturbing adjacent layers.

In liquid chromatography, furthermore, the eluent from the column is routinely subjected to various types of analyses, each of the cells for these analyses holding a sample of the eluent at least a short period of time. When more than one type of analysis is performed in parallel, such as for detecting more than one compound or for confirming the identity of a compound, a splitter may be used to divide the eluent into a plurality of streams, each stream being subjected to a particular type of analysis, but a meaningful comparison may be difficult between the results because different sample volumes may be subjected to analysis at different points in time. Comparison may become inaccurate, furthermore, if the sample becomes mixed with adjacent aliquots as explained, for example, by Y. Hirata, et al, "Techniques of Capillary Liquid Chromatography", J. Chromatography, 186 521 (1979). If use is to be made of separate detectors, each with its own illumination source, optics and flow cell, they must be independently calibrated and thermal drift must also be taken into account. This will make this approach additionally cumbersome.

It is therefore a further object of the present invention to provide a multi-flow cell detector for detection of the constituents within a liquid chromatographic eluent, combining in a single opto-mechanical package multiple flow cells for sequential or simultaneous (parallel) analyses.

Brief Description of the Drawings

FIG. 1 shows schematically the general layout of a liquid chromatographic eluent absorbance detector embodying the present invention.

FIG. 2 shows schematically with representative beam rays an optical system for the detector of FIG. 1.

FIG. 3 shows another embodiment of an optical system for a multiflow cell detector.

## Detailed Description of the Invention

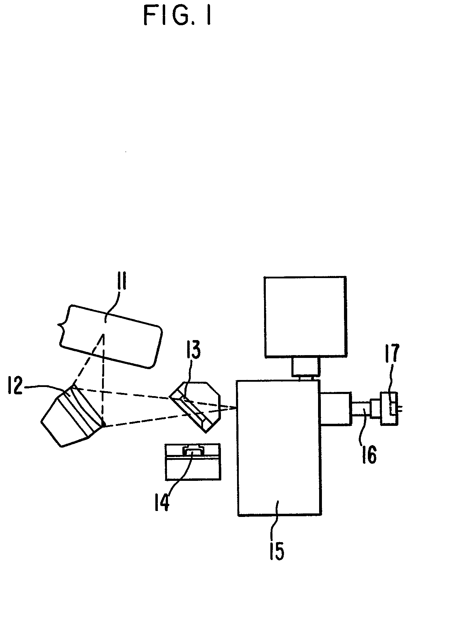

There is shown in FIG. 1 the general layout of a liquid chromatographic eluent absorbance detector embodying the present invention, the detector comprising a light source 11, a toroidal mirror 12, a beamsplitter 13, a reference photodiode 14, a monochromator 15, a flow cell assembly 16 and a sample photodiode 17. The light source 11 may be a deuterium discharge tube or any other suitable lamp capable of emitting light of a spectrum of wavelengths including the desired wavelength. The toroidal mirror 12 is disposed so that the light from the source 11 is thereby reflected, forming a converging beam directed to the monochromator 15. Between the mirror 12 and the monochromator 15 is disposed a semitransparent beamsplitter 13 which transmits approximately 90% of the incident beam and reflects the remaining 10%. The reference photodiode 14 is positioned where the converging light reflected from the beamsplitter 13 is focused and its signal is detected.

The optical system for conducting a light flux through the flow cell assembly 16 into the sample photodiode 17 is schematically illustrated in FIG. 2 where flow cell 21 is a tubular chamber of length about 4 mm with cylindrical inner wall 22 of cross-sectional diameter about 1.2 mm, front window 23 and back window 24. The interior of the cell 21 is connected to a liquid chromatography column (not shown) through an inlet 25 and to an outlet 26 so that the liquid will flow generally uniformly in the direction parallel to the symmetry axis 30 of the flow cell 21. Front and back windows 23 and 24 are perpendicular to the axis 30 and cover the entire cross-sectional area of the flow cell 21.

The optical system includes a limiting system field stop 31, a limiting system aperture stop 32 and positive lenses 41, 42 and 43. The field stop 31 is a screen with an opening placed at a position where the light source 11 forms an image. The opening can be circular, or of a shape bounded by two arcs of a circle and two parallel lines. As illustrated by three representative rays 51, 52 and 53 emanating from a common field point 54, field stop 31 plays the role of a secondary light source. Positive lenses 41, 42 and 43, arranged in that order on the axis 30 are so designed that the rays entering lens 41 from a same point on the field stop opening 31 such as rays 51, 52 and 53 will emerge as a collimated beam after passing through it and form a real image on front window 23 after passing through lenses 42 and 43. Aperture stop 32 is a circular opening in a screen placed on and perpendicular to the axis 30 so as to limit the cross-section of the light beam. Lenses 41, 42 and 43 are further so designed that an image of aperture stop 32 will be formed on back window 24 in the presence of liquid inside the flow cell 21. The dimensions of stops 31 and 32 are so adjusted that their images formed respectively on front and back windows 23 and 24 are circles, or confined within circles the diameters of which are nearly equal to but slightly smaller than that of the internal bore of cell 21. This small difference between the bore of cell 21 and size of the images represents the zone near wall 22 inside which aberrations of the absorbance signal are generated when this apparatus is used without thermal equilibrium between wall and liquid as, for example, in liquid chromatography. Therefore, it is desired to keep a layer adjacent to the wall reliably in the dark. If the illustrated optical system is adjusted as discussed above, it is possible to illuminate the exact fundamental minimum volume of liquid with only a marginal clearance zone around it required to keep the wall 22 and the adjacent gradient layer reliably in the dark. Every ray which passes through stops 31 and 32 is bound to pass through front window 23 and also through back window 24 without being internally reflected on cell wall 22.

The rays which pass through cell 21 are measured by the sample photodiode 17. Positive lenses 44 and 45 are placed so that an image of front window 43 will be formed (or, rays 51, 52 and 54, for example, will be focused) at the position of the sample photodiode 17.

According to a preferred embodiment of the present invention, lenses 43 and 44 are hemispherical (planoconvex) lenses with their plane surfaces forming the boundaries of the liquid column in cell 21, or, in effect, the front and back windows 23 and 24, and so dimensioned that the immersed focus of each lens will be at the opposing boundary. This configuration will lead to field imagery which is telecentric to one side and collimated to the other, while it is the other way around with the aperture imagery.

Alternatively, lenses 43 and 44 may be hyper-hemispherical lenses with their plane surfaces forming the boundaries of the liquid column in cell 21 and so dimensioned that the immersed aplanatic point of each is at its plane boundary while its immersed focus is at the opposing boundary. It can be shown that flow cell systems with hemispherical and hyper-hemispherical lenses can be so dimensioned that they become equivalent in relation to the external optical system and hence directly interchangeable within it. With the parameter n defined as the design refractive index of the system, all dimensional, optical and chromatographic quantities of such interchangeable cells scale in powers of n as follows:

| Quantity | Hemisphere | Hyper-Hemisphere |
|---|---|---|
| Lens radius | $n$ | $1$ |
| Cell path length | $n^2$ | $1$ |
| Cell diameter | $n$ | $1$ |
| Cell cross-section | $n^2$ | $1$ |
| Cell volume | $n^4$ | $1$ |
| Signal-to-Noise Ratio (at equal concentration) | $n^2$ | $1$ |
| Detectable Concentration (at equal signal-to-noise ratio) | $1$ | $n^2$ |

Thus, the use of hemispherical and hyper-hemispherical lenses permits direct interchangeability of flow cells with widely different characteristics. Moreover, both these types of lenses are economical to produce, are self-centering in assembly and are compatible with mountings that yield high liquid pressure integrity.

The liquid chromatographic eluent absorbance detector of FIGS. 1 and 2 has many favorable features. For example, the cylindrical illuminated volume of the flow cell 21 equals by definition the exact fundamental minimum required to transmit the available light flux with only a marginal clearance zone near the wall to keep the gradient layer in the dark. Another important feature is that light with the full spectrum of wavelengths from the source 11 is received by the reference photodiode 14 because the beamsplitter 13 is so positioned with respect to the monochromator 15 that the attenuation of light energy by the monochromator 15 does not affect the intensity measured by the reference photodiode 14.

In FIG. 3, there is shown another embodiment of the present invention which can be used, for example, to simultaneously monitor the effluent from multiple liquid chromatography columns where detection is at the same wavelength. According to the design illustrated as an example in FIG. 3 wherein parts comparable to those in FIG. 2 are designated by like numerals, use is made of a multi-flow cell assembly 16' having three identically shaped cylindrical flow cells 21' which are evenly positioned one on top of another. A pair of planoconvex lenses 43, and 44, which form a part of the optical system provide front and back windows (or boundaries) 23' and 24' to these cells 21'. Although these cells 21' are thus parallel-connected optically, they may be connected (not shown) either in parallel, for example, to liquid chromatography columns or serially, for example, for a multi-point determination of post-column reaction rates. The symmetry axis of the optical system is No. 30' and the plane surfaces of lenses 43' and 44' providing the front and back windows 23' and 24' are perpendicular to this axis 30'.

The optical system is so designed that each of the cells 21' will be illuminated not only by beams of light from the same source and through the same monochromator, but also with an etendue substantially equal to the maximum obtainable in a cell of the given clear cross-sectional diameter and path lengths, that is, not only does every ray of a flux of light passing through one of the openings 61 pass through one of these cells 21' without being reflected therein, but each of such fluxes sweeps the volume of one of the cells 21' substantially entirely while leaving only a predetermined marginal zone near the wall in the dark. In FIG. 3 a screen 60 perpendicular to the axis 30' and having three openings 61 therethrough is at the back plane of a substantially telecentric monochromator. Each of the openings 61 is provided with a planoconcave lens 62 on the front side with its plane surface toward the screen 60. Collimated beams passing through a stop with a single opening (not shown) in the monochromator form virtual images 69 by these planoconcave lenses 62. These virtual images function as secondary (virtual) sources of light, the beams appearing behind the screen 60 as if they originated from these virtual sources 69.

The planar surface of a planoconvex lens 63 with its axis of symmetry coinciding with the axis 30' covers the three openings 61 in the screen 60. The two positive lenses 63 and 43' are so designed and positioned that beams which seem to originate from one of the virtual sources 69 will focus on the front window 23' of one of the flow cells 21' as shown by representative beam lines 66 and 67 and that beams which emanate from a common point at one of the openings 61 converge and focus on the back window 24' of one of the flow cells 21' without getting reflected on the inner wall of the cells 21'. Behind the planoconvex lens 44' is another planoconvex lens 45' so that the beams that pass through the three flow cells 21' will be focused separately at three sample detectors 17'.

The multi-channel, multi-flow cell detector of FIG. 3 has many advantageous features. Since it uses a single light source, a single monochromator and multiple flow cells combined into a single opto-mechanical package, frequent calibrations and constant drift corrections are not required and the cells can be maintained at equal temperatures without any trouble. As stated above, this detector can also be used to simultaneously monitor the effluent from multiple liquid chromatography columns if detection is at the same wavelength. This can be particularly useful for laboratories doing quality control. Moreover, this invention can result in cost savings because multiple detection channels are incorporated into a single package.

The present invention has been described above in terms of only a few embodiments, but the description above is intended to be illustrative rather than limiting, and hence the disclosure should be construed broadly. For example, the word "light" used throughout herein must be interpreted broadly to include electromagnetic radiation of all wavelengths, such as ultraviolet radiation. The word "window" is to be interpreted both in an optical sense, e.g., either a field or aperture image and in a material sense, e.g., a transparent boundary to a liquid column. The stops (or openings) are preferably circular or nearly circular in shape, but they may be of different shapes for the convenience of matching optical system components economically. The flow cells, likewise, need not be circular in cross-section, and the light detecting means, too, can be of any design and type. The number of flow cells in a multi-cell design need not be three and these cells may be stacked together in any convenient manner. They may also be connected together in different ways so that different patterns of liquid flow can be established. The direction of liquid flow in any cell need not necessarily be from front to the back. As for the optical system, lenses and stops need not necessarily be arranged as shown. Regarding FIG. 2, for example, the lenses may be so designed and arranged that real images of the field and aperature stops 31 and 32 are formed respectively on the back and front windows 24 and 23 of the cell 21. Regarding FIG. 3, similarly, the positive lenses may be so designed and arranged, for example, that real images of the opening 61 and the virtual sources 69 are formed respectively on the back and front windows 24' and 23' of the cells 21'. The scope of the present invention is limited only by the following claims.

0168939

Claims

1.  A multi-flow cell liquid chromatography absorbance detector comprising

a single source of multi-wavelength light,

a number of tubular absorbance flow cells parallel to an axis, each thereof having a cylindrical inner wall, a transparent front window and a transparent back window, both said windows being perpendicular to said axis and forming respectively a front boundary surface and a back boundary surface which confine a column of flowing liquid, and

an optical system including a monochromator, said optical system being adapted to form said number of fluxes of monochromatic beams from the light of said single source, each of said monochromatic fluxes being adapted to pass entirely through one of said cells by sweeping substantially the entire volume of said one cell without being reflected by the inner wall of said one cell.

2.  The detector of claim 1 further comprising a means for forming a first beam from the light from said source.

3.  The detector of claim 2 further comprising a beamsplitter means for forming a second beam and a third beam from said first beam.

4.  The detector of claim 3 further comprising a reference detector means for measuring said second beam, said third beam being adapted to enter said optical system.

5. The detector of claim 1 wherein said optical system further includes a first planoconvex lens, portions of the plane surface thereof coinciding with said front boundary surfaces.

6. The detector of claim 5 wherein said optical system further includes a second planoconvex lens, portions of the plane surface thereof coinciding with said back boundary surfaces.

7. The detector of claim 1 further comprising said number of individual sample detectors and a means for focusing said monochromatic fluxes passing through said cells individually on said sample detectors.

8. The detector of claim 1 wherein said inner walls clear all possible light rays through said cells by prescribed margins.

9. The detector of claim 1 further comprising a first stop with a single opening and a second stop with said number of openings.

10. The detector of claim 9 wherein said optical system is adapted to form real images of said single opening on each of said front windows and real images of said openings in said second stop individually on said back windows.

11. The detector of claim 9 wherein said optical system is adapted to form a real image of said single opening on each of said back windows and real images of said openings in said second stop individually on said front windows.

1/2

FIG. 1

FIG.2

FIG.3